# EUROPÄISCHE PATENTSCHRIFT

(11) **EP 1 935 693 B1**
(45) Veröffentlichungstag und Bekanntmachung des Hinweises auf die Patenterteilung: **05.10.2011**
(21) Anmeldenummer: 07024910.7
(22) Anmeldetag: 21.12.2007
(51) Int. Cl.: B60J 7/20

(54) **Heckdeckel für einen Aufbau eines Kraftfahrzeugs**
Trunk lid for the structure of a motor vehicle
Hayon arrière pour la structure d'un véhicule automobile

(30) Priorität: 23.12.2006 DE 102006061489
(43) Veröffentlichungstag der Anmeldung: 25.06.2008
(73) Patentinhaber: Magna Car Top Systems GmbH, 74321 Bietigheim-Bissingen (DE)
(72) Erfinder: Rösler, Mattthias, Dipl.-Ing., 70180 Stuttgart (DE)

(56) Entgegenhaltungen:
- WO-A-2004/078505
- DE-A1- 19 932 500
- DE-A1-102005 006 272

## Beschreibung

Die Erfindung bezieht sich auf einen Heckdeckel für einen Aufbau eines Kraftfahrzeugs, insbesondere Personenkraftwagens nach dem Oberbegriff des Patentanspruchs 1. Ein solcher Heckdeckel ist aus der DE 102005006272 A bekannt.

Aus der US 2004/0178 656 A1 geht ein umwandelbares Dach für ein Kraftfahrzeug hervor, das aus einer einen Fahrgastraum abdeckenden Schließstellung in eine in einen Aufnahmeraum untergebrachte Offenstellung bewegbar ist. Der Aufnahmeraum, der in einen Aufbau integriert ist, wird von einem Heckdeckel umgeben. Der Heckdeckel ist in zwei Endstellungen bewegbar, und zwar in eine Gepäckstellung und in eine Dachtransportstellung. In der Gepäckstellung ist der Heckdeckel -in Fahrtrichtung gesehenhinten angehoben und vorne tiefer liegend angeordnet. Dagegen ist in der Dachtransportstellung der Heckdeckel in gleicher Fahrtrichtungsbetrachtung vorne angehoben und hinten abgesenkt. Um diese Stellung zu erzielen, ist der Heckdeckel mit einem ersten Lenker verbunden, über den der Heckdeckel in die Gepäckstellung bewegt wird. Am ersten Lenker sind zwei eine Art Parallelogramm bildende zweite und dritte Lenker angeordnet, mit denen der Heckdeckel in die Dachtransportstellung verstellbar ist.

In der DE 199 32 500 C2 wird eine Stauraumabdeckung für ein Fahrzeug mit einem beweglichen Fahrzeugdach behandelt. Das Fahrzeug ist mit einer schwenkbaren Heckklappe versehen, die wahlweise als Kofferraumdeckel um eine nahe ihrer Vorderkante angeordnete Schwenkachse oder als Verdeckkastendeckel um eine nahe ihrer Hinterkante angeordnete hintere Schwenkachse schwenkbar ist. Dabei ist die Heckklappe an einem Hilfsrahmen angelenkt, und die ein separates Bauteil bildende Stauraumabdeckung ist mit dem Hilfsrahmen verbunden.

Gemäß der DE 100 64 363 C2 ist eine mehrteilige Abdeckung für ein Fahrzeug bekannt, die als Verdeckkastenabdeckung für einen Verdeckraum ausgebildet ist. Besagte Abdeckung ist oberhalb des Verdeckraums angeordnet und unter Vermittlung von Lenkern am Aufbau gelagert. Die Lenker sind nach Art einer Schere
zueinander angeordnet und an der Verdeckkastenabdeckung und einem Aufbau des Fahrzeugs angebracht.

Es ist Aufgabe der Erfindung, einen Heckdeckel für einen Aufbau eines Personenkraftwagens mit einem umwandelbaren Dach zu schaffen, der sich funktionsgerecht und mit einfachen Mitteln aus einer Grundstellung in eine Gepäckstellung bzw. in eine Dachtransportstellung bewegen lässt.

Erfindungsgemäß wird diese Aufgabe durch die Merkmale des Patentanspruchs 1 gelöst. Weitere, die Erfindung ausgestaltenden Merkmale sind in den Unteransprüchen enthalten.

Die mit der Erfindung hauptsächlich erzielten Vorteile sind darin zu sehen, dass der Heckdeckel mit der ersten Lenkereinheit, der zweiten Lenkereinheit sowie der Kupplungsvorrichtung zwischen den beiden Lenkereinheiten nicht nur ausgezeichnet in die Grundstellung, sondern auch in die Gepäckstellung bzw. die Dachtransportstellung steuerbar und in letzterer festlegbar ist. Das zweite Lager des ersten Lenkers kann auf einfache Weise lagefest am Aufbau angebracht sein. Die zweite Lenkereinheit ist mit einem ersten und einem zweiten Lenkerglied versehen, die über ein Gelenk miteinander verbunden sind. Dabei ist das vierte Lager der zweiten Lenkereinheit mit einer leicht umsetzbaren Schiebevorrichtung ausgestattet, die in Fahrzeuglängsrichtung ausgerichtet ist. Denkbar ist aber auch die zweite Lenkereinheit durch ein erstes Lenkerglied, ein zweites Lenkerglied und ein drittes Lenkerglied zu bilden, die unter Zwischenschaltung von einem ersten und einem zweiten Gelenk zusammenarbeiten. Zwischen der ersten Lenkereinheit und der zweiten Lenkereinheit ist ein Kupplungshebel wirksam, der ohne weiteres realisierbar ist und vorbildlich mit der Kupplungsvorrichtung zusammenarbeitet. An dem Kupplungshebel ist ein Schiebeorgan vorgesehen, das mit der ersten und der zweiten Lenkereinheit ausgezeichnet zusammenarbeitende Kupplungselemente aufweist. Schließlich lässt sich diese Kupplungsvorrichtung unter Vermittlung einer Betätigungseinrichtung trefflich beeinflussen.

In der Zeichnung wird ein Ausführungsbeispiel der Erfindung gezeigt, das nachstehend näher beschrieben wird.

Es zeigen
Fig. 1 eine schematische Seitenansicht eines Personkraftwagens mit dem Heckdeckel nach der Erfindung,
Fig. 2 eine Teilansicht des Personenkraftwagens mit einer ersten Ausführungsform eines Heckdeckel, der eine Grundstellung einnimmt,
Fig. 3 eine Ansicht entsprechend Fig. 2, bei der der Heckdeckel eine Gepäckstellung einnimmt,
Fig. 4 eine Ansicht entsprechend Fig. 2, bei der der Heckdeckel eine Dachtransportstellung einnimmt,
Fig. 5 eine Ansicht entsprechend Fig. 2, jedoch in größerem Maßstab,
Fig. 6 eine Ansicht entsprechend Fig. 2, jedoch mit einer zweiten Ausführungsform,
Fig. 7 eine Ansicht entsprechend Fig. 6, bei der der Heckdeckel eine Dachtransportstellung einnimmt,
Fig. 8 eine Ansicht entsprechend Fig. 6, bei der der Heckdeckel eine Gepäckstellung einnimmt,
Fig. 9 eine Ansicht entsprechend Fig. 6, jedoch in größerem Maßstab.

Ein Personenkraftwagen 1 umfasst einen Aufbau 2, der von Rädern 3 und 4 getragen wird und mit einem umwandelbaren Dach 5 versehen ist. Das Dach 5 weist mehrere bewegliche Dachelemente 6, 7 und 8 auf, und ist aus einer einen

Fahrgastraum 9 überspannenden Schließstellung Schst in eine in einem Aufnahmeraum 10 abgelegten Offenstellung Ost bewegbar und vice versa. Der Aufnahmeraum 10 ist in einem rückwärtigen Bereich 11 des Aufbaus 2 angeordnet und mittels eines Schwenkbewegungen ausführbaren Heckdeckels 12 aus einer Grundstellung Grst in eine Gepäckstellung Gpst und in eine Dachtransportstellung Dst verstellbar ist. In der Gepäckstellung Gpst ist der Aufnahmeraum 10 be- und entladbar; in der Dachtransportstellung Dst ist das Dach 5 in die Offenstellung Ost bzw. Schließstellung Schst bewegbar.

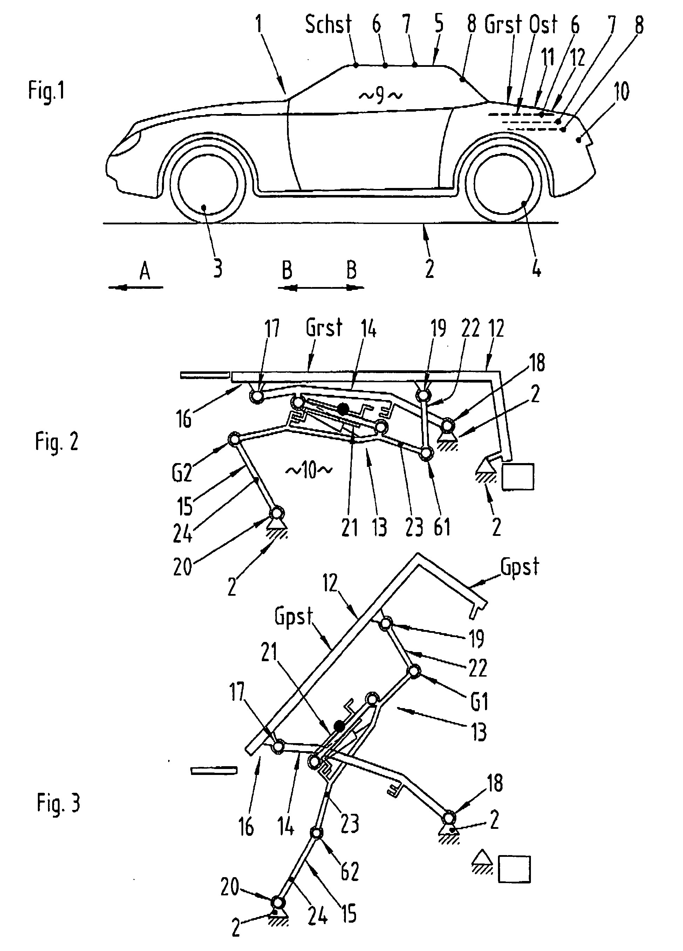

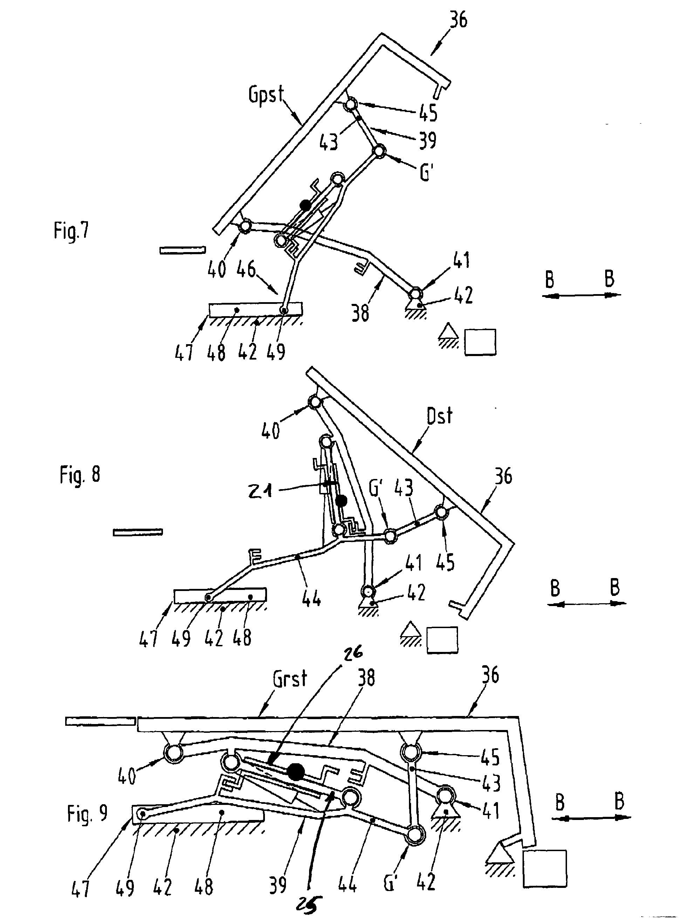

Der Heckdeckel 12 ist unter Zwischenschaltung eines Lenkersystems 13 zwischen Grundstellung Grst -Fig. 2, 5, 6 und 9- , Gepäckstellung Gpst -Fig. 3, 4 und 8- und Dachtransportstellung Dst -Fig. 3 und 7- .betätigbar, welches Lenkersystem 13 sich aus einer ersten Lenkereinheit 14 und einer zweiten Lenkereinheit 15 zusammensetzt. Die erste Lenkereinheit 14 wirkt einerseits benachbart einem vorderen Bereich 16 des Heckdeckels 12 mit einem ersten Lager 17 und andererseits mit einem am Aufbau 2 lagefest angeordneten zweiten Lager 18 zusammen. Die zweite Lenkereinheit 15 ist zum einen entgegen der Fahrtrichtung A gesehen an einem mit Abstand zum ersten Lager 17 angebrachten dritten Lager 19 mit dem Heckdeckel 12 und zum anderen mit einem am Aufbau 2 gehaltenen vierten Lager 20 verbunden. Zur Ansteuerung der Grundstellung Grst, der Gepäckstellung Gpst und der Dachtransportstellung Dst dient eine Kupplungsvorrichtung 21, die zwischen der ersten Lenkereinheit 14 und der zweiten Lenkereinheit 15 des Lenkersystems 13 arbeitet.

Die zweite Lenkereinheit 15 wird durch ein erstes Lenkerglied 22, ein zweites Lenkerglied 23 und ein drittes Lenkerglied 24 gebildet. Dabei sind zwischen dem ersten Lenkerglied 22 und dem zweiten Lenkerglied 23 ein erstes Gelenk G1 und dem zweiten Lenkerglied 23 und dem dritten Lenkerglied 24 ein zweites Gelenk G2 vorgesehen. Die erste Lenkereinheit 14 und die zweite Lenkereinheit 15 sind Bestandteil einer Mehrgelenkkinematik, insbesondere einer Siebengelenkkinematik.

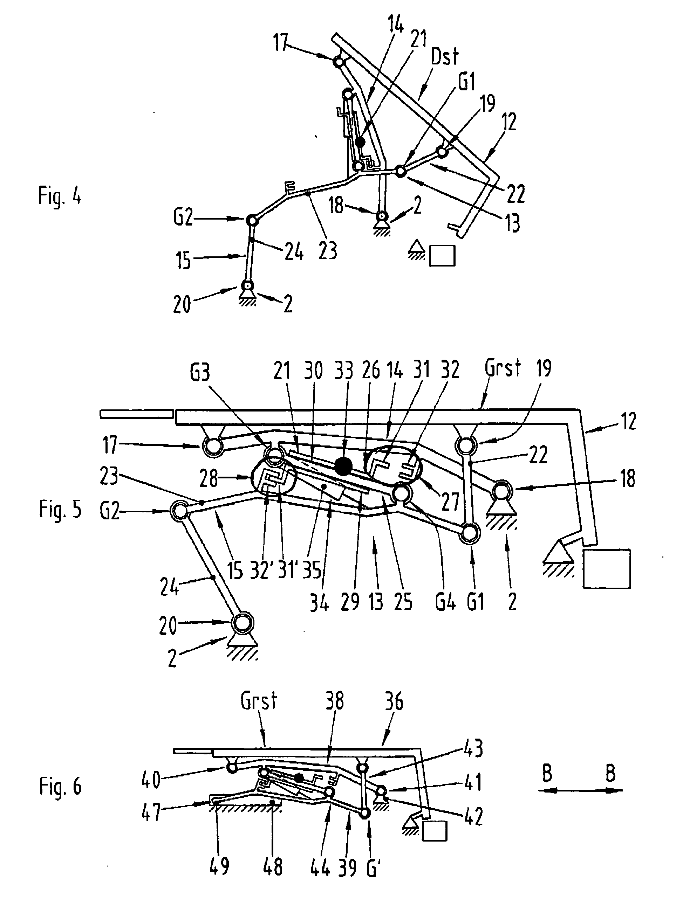

Zwischen der ersten Lenkereinheit 14 und der zweiten Lenkereinheit 15 ist ein Kupplungshebel 25 wirksam -Fig. 5-, der unter Vermittlung eines dritten Gelenks G3 mit der ersten Lenkereinheit 14 und eines vierten Gelenks G4 mit der zweiten Lenkereinheit 15 zusammenwirkt, und zwar mit dem zweiten Lenkerglied 23 der zuletzt genannten Lenkereinheit 15. Der Kupplungshebel 25 arbeitet mit der Kupplungsvorrichtung 21 zusammen, und sie weist am Kupplungshebel 25 ein Schiebeorgan 26 auf, das axial auf dem Kupplungshebel 25 verschiebbar ist und über Kupplungselemente 27 und 28 mit der ersten Lenkereinheit 14 und der zweiten Lenkereinheit zusammenarbeitet. Hierzu ist das Schiebeorgan 26 nach Art eines Rohres 29 ausgeführt, das einen Wellenabschnitt 30 des Kupplungshebels 25 umgibt. Die Kupplungselemente 27 und 28 sind einerseits am Schieborgan 26 und andererseits an der ersten Lenkereinheit 14 bzw. am zweiten Lenkerglied 23 der zweiten Lenkereinheit 15 angebracht.

Für jede Lenkereinheit umfassen die Kupplungselemente -z.B. 27- ein Eingriffsglied 31 und ein Aufnahmeglied 32, die unter Formschluss zusammenwirken. Die Eingriffsglieder 31 und 31' sind an Enden des Rohrs 29 des Schiebeorgans 26 angebracht; die Aufnahmeglieder 32 und 32' an der ersten Lenkereinheit 14 und der zweiten Lenkereinheit 15.

Zur Beeinflussung der Kupplungsvorrichtung 21 dient eine erste Betätigungseinrichtung 33, die zwischen Kupplungshebel 25 und Schiebeorgan 26 bzw. Wellenabschnitt 30 und Rohr 29 wirksam ist Die Betätigungseinrichtung 33 kann durch ein Keilschubgetriebe, ein Zahnstangengetriebe oder dgl. gebildet werden -nicht näher abgebildet-, wobei auch andere Betätigungs- oder Getriebesysteme einsetzbar sind.

Um den Heckdeckel 12 zwischen Grundstellung Gst, Gepäckstellung Gpst oder Dachtransportstellung Dst zu bewegen ist eine zweite Betätigungseinrichtung 34 vorgesehen die am Lenkersystem 13 angreift, und zwar im Ausführungsbeispiel am Gelenk G3 der ersten Lenkereinheit 14. Die zweite Betätigungseinrichtung 34 kann durch einen Hydraulikzylinder 35 oder einen Elektromotor dargestellt werden.

In den Fig. 6 bis 9 wird ein Heckdeckel 36 mittels eines Hebelsystems 37 bewegt, das eine erste Lenkereinheit 38 und eine zweite Lenkereinheit 39 aufweist. Die erste Lenkereinheit 38 ist unter Vermittlung eines ersten Lagers 40 am Heckdeckel 36 und einem zweiten Lager 41 an einem Aufbau 42 gelagert. Die zweite Lenkereinheit 39 umfasst ein erstes Lenkerglied 43 und ein zweites Lenkerglied 44, die über ein Gelenk G' gekoppelt sind. Dabei ist das erste Lenkerglied 43 der zweiten Lenkereinheit 39 über ein drittes Lager 45 am Heckdeckel 36 und das zweite Lenkerglied 44 der besagten zweiten Lenkereinheit mittels eines vierten Lagers 46 am Aufbau 42 in Lage gehalten. Dieses vierte Lager 46 ist in Gestalt einer Schiebevorrichtung 47 aufgebaut, die ein Führungselement 48 für einen Schwenkzapfen 49 besitzt und in Fahrzeuglängsrichtung B-B ausgerichtet ist.

## Patentansprüche

1. Heckdeckel (12) für einen Aufbau (2) eines Kraftfahrzeugs, insbesondere Personenkraftwagens (1), der ein umwandelbares in einen mit dem Heckdeckel (12) verschließbaren Aufnahmeraum (10) des Aufbaus (2) ablegbares Dach (5) aufweist, welcher unter Zwischenschaltung eines Lenkersystems (13) verstellbare Heckdeckel (12) wahlweise aus einer Grundstellung (Grst) in eine Gepäckstellung (Gpst) oder in eine Dachtransportstellung (Dst) bewegbar ist, **dadurch gekennzeichnet, dass** das Lenkersystem (13; 37) für den Heckdeckel (12; 36) eine erste in einem benachbart einem vorderen Bereich (16) des Heckdeckels (12; 36) angeordneten ersten Lager (17; 40) und in einem zweiten am Aufbau (2; 42) angebrachten Lager (18; 41) angelenkte Lenkereinheit (14; 43) sowie eine zweite Lenkereinheit (15; 44) besitzt, die einerseits mit einem -entgegen der Fahrtrichtung A gesehen- mit Abstand zum ersten Lager (17; 40) eingesetzten dritten Lager (19; 43) am Heckdeckel (12; 36) und andererseits an einem vierten Lager (20; 46) am Aufbau (2; 42) gehalten ist, wobei zwischen der ersten Lenkereinheit (14; 43) und der zweiten Lenkereinheit (15; 44) eine Kupplungsvorrichtung (21) vorgesehen ist, über die die erste Lenkereinheit (14; 43) und die zweite Lenkereinheit (15; 44) zur Festlegung der Grundstellung (Gst), der Gepäckstellung (Gpst) bzw. Dachtransportstellung (Dst) ansteuerbar sind.

2. Heckdeckel nach Anspruch 1, **dadurch gekennzeichnet, dass** das zweite Lager (18) der ersten Lenkereinheit (14) lagefest am Aufbau (2) vorgesehen ist.

3. Heckdeckel nach Anspruch 1, **dadurch gekennzeichnet, dass** die zweite Lenkereinheit (39) durch ein erstes Lenkerglied (43) und zweites Lenkerglied (44) gebildet wird, die über ein Gelenk (G') miteinander verbunden sind, wobei das vierte Lager (46) der zweiten Lenkereinheit (39) mit einer in Fahrzeuglängsrichtung (B-B) wirkenden Schiebevorrichtung (47) versehen ist.

4. Heckdeckel nach Anspruch 3, **dadurch gekennzeichnet, dass** die Schiebvorrichtung (47) ein Führungselement (48) für einen Schwenkzapfen (49) des vierten Lagers (46) besitzt.

5. Heckdeckel nach Anspruch 5, **dadurch gekennzeichnet, dass** das Führungselement (48) horizontal und in Fahrzeuglängsrichtung (B-B) ausgerichtet ist.

6. Heckdeckel nach Anspruch 1, **dadurch gekennzeichnet, dass** die zweite Lenkereinheit (15) ein erstes Lenkerglied (22), ein zweites Lenkerglied (23) und ein drittes Lenkerglied (24) umfasst, wobei zwischen dem ersten Lenkerglied (22) und dem zweiten Lenkerglied (23) ein erstes Gelenk (G1) und zwischen dem zweiten Lenkerglied (23) und dem dritten Lenkerglied (24) ein zweites Gelenk (G2) vorgesehen sind.

7. Heckdeckel nach einem oder mehreren der vorangehenden Ansprüche, **dadurch gekennzeichnet, dass** die erste Lenkereinheit (14; 38) und die zweite Lenkereinheit (15; 39) Bestandteil einer Mehrgelenkkinematik, vorzugsweise Siebengelenkkinematik ist.

8. Heckdeckel nach Anspruch 1, **dadurch gekennzeichnet, dass** zwischen der ersten Lenkereinheit (14; 38) und der zweiten Lenkereinheit (15; 39) ein Kupplungshebel (25) wirksam ist, der mit der Kupplungsvorrichtung (21) zusammenarbeitet.

9. Heckdeckel nach Anspruch 8, **dadurch gekennzeichnet, dass** die Kupplungsvorrichtung (21) am Kupplungshebel (25) ein Schiebeorgan (26) aufweist, das über Kupplungselemente mit der ersten Lenkereinheit (14) und der zweiten Lenkereinheit (15) zusammenarbeitet.

10. Heckdeckel nach Anspruch 9, **dadurch gekennzeichnet, dass** die Kupplungselemente (27 und 28) einerseits am Schiebeorgan (26) und andererseits an der ersten Lenkereinheit (14) bzw. an der zweiten Lenkereinheit (15) angeordnet sind.

11. Heckdeckel nach Anspruch 10, **dadurch gekennzeichnet, dass** die Kupplungselemente für jede Lenkereinheit ein Eingriffsglied (31; 31') und ein Aufnahmeglied (32; 32') umfassen, die unter Formschluss zusammenwirken.

12. Heckdeckel nach Anspruch 11, **dadurch gekennzeichnet, dass** die Eingriffsglieder (31; 31') an Enden des Schiebeorgans (26) angeordnet sind.

13. Heckdeckel nach Anspruch 11, **dadurch gekennzeichnet, dass** die Aufnahmeglieder (32; 32') an der ersten Lenkereinheit (14) und der zweiten Lenkereinheit (15) angebracht sind.

14. Heckdeckel nach Anspruch 8, **dadurch gekennzeichnet, dass** die Kupplungsvorrichtung (21) mit einer ersten Betätigungseinrichtung (33) zusammenarbeitet.

15. Heckdeckel nach den Ansprüchen 9 und 14, **dadurch gekennzeichnet, dass** die Betätigungseinrichtung (33) zwischen Kupplungshebel und Schiebeorgan wirksam ist.

16. Heckdeckel nach Anspruch 15, **dadurch gekennzeichnet, dass** die Betätigungseinrichtung (33) durch ein Keilschubgetriebe, Zahnstangengetriebe oder dgl. gebildet wird.

17. Heckdeckel nach Anspruch 1, **dadurch gekennzeichnet, dass** der Heckdeckel (12; 36) mittels einer zweiten Betätigungseinrichtung (34) beeinflussbar ist, die am Lenkersystem (13; 37) angreift.

18. Heckdeckel nach Anspruch 17, **dadurch gekennzeichnet, dass** die zweite Betätigungseinrichtung (34) durch einen Hydraulikzylinder (35), einen Elektromotor oder dgl. gebildet wird.

## Claims

1. Rear lid (12) for a body (2) of a motor vehicle, in particular of a passenger vehicle (1), which has a convertible roof (5) which can be deposited into a receiving space (10), which is closable by the rear lid (12), in the body (2), which rear lid (12), which can be adjusted with the interconnection of a link system (13), can optionally be moved from a basic position (Grst) into a luggage position (Gpst) or into a roof transport position (Dst), **characterized in that** the link system (13; 37) for the rear lid (12; 36) has a first link unit (14; 43) which is articulated in a first bearing (17; 40) arranged adjacent to a front region (16) of the rear cover (12; 36) and in a second bearing (18; 41) attached to the body (2; 42), and a second link unit (15; 44) which is held at one end on the rear cover (12; 36) by a third bearing (19; 43) inserted at a distance from the first bearing (17; 40) - as seen counter to the direction of travel A - and is held at the other end on the body (2; 42) at a fourth bearing (20; 46), a coupling device (21) being provided between the first link unit (14; 43) and the second link unit (15; 44), via which coupling device the first link unit (14; 43) and the second link unit (15; 44) can be activated in order to fix the basic position (Gst), the luggage position (Gpst) or roof transport position (Dst).

2. Rear lid according to Claim 1, **characterized in that** the second bearing (18) of the first link unit (14) is provided in a fixed position on the body (2).

3. Rear lid according to Claim 1, **characterized in that** the second link unit (39) is formed by a first link member (43) and second link member (44) which are connected to each other via a joint (G'), and the fourth bearing (46) of the second link unit (39) is provided with a sliding device (47) acting in the longitudinal direction (B-B) of the vehicle.

4. Rear lid according to Claim 3, **characterized in that** the sliding device (47) has a guide element (48) for a pivot pin (49) of the fourth bearing (46).

5. Rear lid according to Claim 4, **characterized in that** the guide element (48) is oriented horizontally and in the longitudinal direction (B-B) of the vehicle.

6. Rear lid according to Claim 1, **characterized in that** the second link unit (15) comprises a first link member (22), a second link member (23) and a third link member (24), a first joint (G1) being provided between the first link member (22) and the second link member (23), and a second joint (G2) being provided between the second link member (23) and the third link member (24).

7. Rear lid according to one or more of the preceding claims, **characterized in that** the first link unit (14; 38) and the second link unit (15; 39) are part of a multi-joint kinematic mechanism, preferably seven-joint kinematic mechanism.

8. Rear lid according to Claim 1, **characterized in that** a coupling lever (25) which cooperates with the coupling device (21) is effective between the first link unit (14; 38) and the second link unit (15; 39).

9. Rear lid according to Claim 8, **characterized in that** the coupling device (21) has a sliding element (26) on the coupling lever (25), said sliding element cooperating with the first link unit (14) and the second link unit (15) via coupling elements.

10. Rear lid according to Claim 9, **characterized in that** the coupling elements (27 and 28) are arranged at one end on the sliding element (26) and at the other end on the first link unit (14) and on the second link unit (15), respectively.

11. Rear lid according to Claim 10, **characterized in that** the coupling elements for each link unit comprise an engagement member (31; 31') and a receiving member (32; 32') which interact with a form-fitting connection.

12. Rear lid according to Claim 11, **characterized in that** the engagement members (31; 31') are arranged at the ends of the sliding element (26).

13. Rear lid according to Claim 11, **characterized in that** the receiving members (32; 32') are fitted on the first link unit (14) and the second link unit (15), respectively.

14. Rear lid according to Claim 8, **characterized in that** the coupling device (21) cooperates with a first actuating device (33).

15. Rear lid according to Claims 9 and 14, **characterized in that** the actuating device (33) is effective between the coupling lever and sliding element.

16. Rear lid according to Claim 15, **characterized in that** the actuating device (33) is formed by a wedge-type slider mechanism, rack mechanism or the like.

17. Rear lid according to Claim 1, **characterized in that** the rear lid (12; 36) can be influenced by means of a second actuating device (34) which acts on the link system (13; 37).

18. Rear lid according to Claim 17, **characterized in that** the second actuating device (34) is formed by a hydraulic cylinder (35), an electric motor or the like.

## Revendications

1. Capot arrière (12) pour une carrosserie (2) d'un véhicule automobile, notamment un véhicule de transport de personnes (1), qui présente un toit (5) convertissable pouvant être rangé dans un compartiment de réception (10) de la carrosserie (2) pouvant être fermé avec le capot arrière (12), lequel toit peut être déplacé au choix d'une position de base (Grst) dans une position de chargement (Gpst) ou dans une position de transport du toit (Dst) par l'interposition d'un système de bras oscillants (13), **caractérisé en ce que** le système de bras oscillant (13 ; 37) pour le capot arrière (12 ; 36) possède une première unité de bras oscillant (14 ; 43) articulée dans un premier palier (17 ; 40) disposé à côté d'une région avant (16) du capot arrière (12 ; 36) et dans un deuxième palier (18 ; 41) monté sur la carrosserie (2 ; 42), ainsi qu'une deuxième unité de bras oscillant (15 ; 44) qui est maintenue d'une part avec un troisième palier (19 ; 43) inséré à distance du premier palier (17 ; 40) - vu dans le sens inverse de la direction de conduite A - sur le capot arrière (12 ; 36) et d'autre part sur un quatrième palier (20 ; 46) sur la carrosserie (2 ; 42), un dispositif d'accouplement (21) étant prévu entre la première unité de bras oscillant (14 ; 43) et la deuxième unité de bras oscillant (15 ; 44), par le biais duquel la première unité de bras oscillant (14 ; 43) et la deuxième unité de bras oscillant (15 ; 44) peuvent être commandées pour fixer la position de base (Gst), la position de chargement (Gpst) ou la position de transport du toit (Dst).

2. Capot arrière selon la revendication 1, **caractérisé en ce que** le deuxième palier (18) de la première unité de bras oscillant (14) est prévue de manière fixée en position sur la carrosserie (2).

3. Capot arrière selon la revendication 1, **caractérisé en ce que** la deuxième unité de bras oscillant (39) est formée par un premier organe de bras oscillant (43) et un deuxième organe de bras oscillant (44) qui sont connectés l'un à l'autre par le biais d'une articulation (G'), le quatrième palier (46) de la deuxième unité de bras oscillant (39) étant pourvu d'un dispositif de coulissement (47) agissant dans la direction longitudinale du véhicule (B-B).

4. Capot arrière selon la revendication 3, **caractérisé en ce que** le dispositif de coulissement (47) possède un élément de guidage (48) pour un tourillon pivotant (49) du quatrième palier (46).

5. Capot arrière selon la revendication 4, **caractérisé en ce que** l'élément de guidage (48) est orienté horizontalement dans la direction longitudinale du véhicule (B-B).

6. Capot arrière selon la revendication 1, **caractérisé en ce que** la deuxième unité de bras oscillant (15) comprend un premier organe de bras oscillant (22), un deuxième organe de bras oscillant (23) et un troisième organe de bras oscillant (24), une première articulation (G1) étant prévue entre le premier organe de bras oscillant (22) et le deuxième organe de bras oscillant (23) et une deuxième articulation (G2) étant prévue entre le deuxième organe de bras oscillant (23) et le troisième organe de bras oscillant (24).

7. Capot arrière selon l'une quelconque ou plusieurs des revendications précédentes, **caractérisé en ce que** la première unité de bras oscillant (14 ; 38) et la deuxième unité de bras oscillant (15 ; 39) font partie d'une cinématique à articulations multiples, de préférence une cinématique à sept articulations.

8. Capot arrière selon la revendication 1, **caractérisé en ce qu'**un levier d'accouplement (25) agit entre la première unité de bras oscillant (14 ; 38) et la deuxième unité de bras oscillant (15 ; 39) et coopère avec le dispositif d'accouplement (21).

9. Capot arrière selon la revendication 8, **caractérisé en ce que** le dispositif d'accouplement (21) présente sur le levier d'accouplement (25) un organe de coulissement (26) qui coopère par le biais d'éléments d'accouplement avec la première unité de bras oscillant (14) et la deuxième unité de bras oscillant (15).

10. Capot arrière selon la revendication 9, **caractérisé en ce que** les éléments d'accouplement (27 et 28) sont disposés d'une part sur l'organe de coulissement (26) et d'autre part sur la première unité de bras oscillant (14) ou sur la deuxième unité de bras oscillant (15).

11. Capot arrière selon la revendication 10, **caractérisé en ce que** les éléments d'accouplement pour chaque unité de bras oscillant comprennent un organe d'engagement (31 ; 31') et un organe de réception (32 ; 32') qui coopèrent par engagement par correspondance géométrique.

12. Capot arrière selon la revendication 11, **caractérisé en ce que** les organes d'engagement (31 ; 31') sont disposés aux extrémités de l'organe de coulissement (26).

13. Capot arrière selon la revendication 11, **caractérisé en ce que** les organes de réception (32 ; 32') sont montés sur la première unité de bras oscillant (14) et la deuxième unité de bras oscillant (15).

14. Capot arrière selon la revendication 8, **caractérisé en ce que** le dispositif d'accouplement (21) coopère avec un premier dispositif d'actionnement (33).

15. Capot arrière selon les revendications 9 et 14, **caractérisé en ce que** le dispositif d'actionnement (33) agit entre le levier d'accouplement et l'organe de coulissement.

16. Capot arrière selon la revendication 15, **caractérisé en ce que** le dispositif d'actionnement (33) est formé par un mécanisme de coulissement à coin, un mécanisme de crémaillère ou similaire.

17. Capot arrière selon la revendication 1, **caractérisé en ce que** le capot arrière (12 ; 36) peut être soumis à un deuxième dispositif d'actionnement (34) qui vient en prise sur le système de bras oscillant (13 ; 37).

18. Capot arrière selon la revendication 17, **caractérisé en ce que** le deuxième dispositif d'actionnement (34) est formé par un cylindre hydraulique (35), un moteur électrique ou similaire.
